# EUROPÄISCHE PATENTSCHRIFT

(11) **EP 3 181 349 B1**
(45) Veröffentlichungstag und Bekanntmachung des Hinweises auf die Patenterteilung: **31.01.2018**
(21) Anmeldenummer: 15200223.4
(22) Anmeldetag: 15.12.2015
(51) Int. Cl.: B32B 9/02, B32B 21/02, B32B 21/10, B32B 21/14, B32B 29/02, B32B 5/08, B32B 21/04, B32B 21/06, B32B 21/13

(54) **VERFAHREN ZUM HERSTELLEN EINES LAMINATS**
METHOD FOR PRODUCING A LAMINATE
PROCEDE DE FABRICATION D'UN LAMINE

(43) Veröffentlichungstag der Anmeldung: 21.06.2017
(60) Teilanmeldung: 17208747.0
(73) Patentinhaber: Flooring Technologies Ltd., Kalkara SCM1001 (MT)
(72) Erfinder: Kalwa, Norbert, 32805 Horn-Bad Meinberg (DE)
(74) Vertreter: Kalkoff & Partner

(56) Entgegenhaltungen:
- EP-A1- 1 584 669
- DE-A1-102006 052 293
- US-A1- 2009 286 044

## Beschreibung

Die Erfindung betrifft ein Verfahren zum Herstellen eines Laminats und ein Laminat mit einer Trägerplatte aufweisend Holzfasern und Kunststofffasern.

Ein Laminat auf der Basis von Holzwerkstoffen, bei denen partikuläres oder faserförmiges Holz mit Kunstharz als Bindemittel zu einem plattenförmigen Holzwerkstoff verbunden ist. Die Oberseite dieser Trägerplatte aus Holzwerkstoff ist mit einem Echtholzfurnier versehen. Eine solche Ausführung ist z. B. aus der DE 10 2006 052 293 A1 bekannt. Das Echtholzfurnier wird bei diesem Laminat mit einer Kunstharzschicht an die Trägerplatte gebunden.

Es besteht Bedarf an einem Laminat, das auf einfache Weise hergestellt wird. Diese Aufgabe wird gelöst durch ein Verfahren nach Anspruch 1 und ein Laminat nach Anspruch 8. Bevorzugte Ausführungen der Erfindung sind Gegenstand der Unteransprüche.

Das erfindungsgemäße Verfahren zum Herstellen eines Laminats mit den Schritten
- Herstellen einer vorverdichteten Fasermatte, aufweisend Holzfasern und Kunststofffasern, als Trägerplatte
- Auflegen eines Echtholzfurniers auf eine Oberseite der Fasermatte, sowie
- Verpressen von Echtholzfurnier, Fasermatte und Gegenzug zu einem Laminat resultiert ein einem einfach aufgebauten Laminat, das in einem Arbeitsgang mit der Herstellung der Trägerplatte aus der vorverdichteten Fasermatte hergestellt wird.

Die vorverdichtete Fasermatte wird hergestellt, indem Holz zu Hackschnitzeln zerkleinert wird, die in Wasser, das ggf. mit Chemikalien versetzt wird, dann gedämpft oder gekocht werden, um anschließend in einem Refiner zerfasert zu werden. Anschließend werden die Fasern auf eine Feuchte von 10 bis 12 % bezogen auf die Fasermasse getrocknet. Diese Holzfasern werden mit Kunststofffasern gemischt, wobei der Anteil der Holzfasern am Gesamt-Fasergemisch von 30 Gewichts-% bis 70 Gewichts-% betragen kann. Vorteilhaft beträgt der Anteil der Holzfasern ca. 40 Gewichts-% bis 50 Gewichts-%, während der Anteil der Kunststofffasern bevorzugt ca. 50 Gewichts-% bis 60 Gewichts-% beträgt. Die Holzfasern können aus beliebigen Holzarten hergestellt sein. Im Sinne dieser Erfindung werden auch Fasern aus anderen lignocellulosischen Rohstoffen wie z. B. Einjahrespflanzen oder Bambus. Die Kunststofffasern sind bevorzugt aus Polyethylen, Polypropylen oder einer Mischung aus diesen Kunststoffen hergestellt. Der Kunststoff kann vorteilhaft modifiziert sein, z. B. mit Maleinsäureanhydrid gegraftet sein. Nach einer besonders bevorzugten Ausführungsform kann die Kunststofffaser einen Kern aus Polypropylen und eine Hülle aus Polyethylen sein. Es können auch Mischungen von Holzfasern und Mischungen von Kunststofffasern eingesetzt werden. Holz- und Kunststofffasern werden zu einem Vorvlies gestreut, das dann zerrissen wird. Anschließend wird aus den Stücken des Vorvlieses ein Vlies gebildet, das in einem ersten Durchströmofen zwischen umlaufenden geflochtenen Stahlblechen (Thermobondingofen) zu einer Matte verdichtet und anschließend abgekühlt wird. Dem Gesamt-Fasergemisch aus Holz- und Kunststofffasern wird kein weiteres Bindemittel zugesetzt. Die Bindung zwischen den Holz- und Kunststofffasern wird allein durch den in der Heizpresse schmelzenden Kunststoff erzeugt.

Auf die Oberseite der so erzeugten Fasermatte wird ein Echtholzfurnier aufgelegt, das bevorzugt eine Stärke von 0,3 mm bis 1,3 mm aufweist. Das Furnier ist in seinen Abmessungen vorteilhaft an die Abmessungen der Matte angepasst, indem entweder z. B. Schälfurnier passender Breite verwendet wird oder Lagen aus miteinander verbundenen Furnierblättern, deren Länge und Breite jeweils an die Abmessungen der Fasermatte angepasst sind. Die Fasermatte mit dem darauf angeordneten Echtholzfurnier wird in eine Heißpresse, bevorzugt eine kontinuierliche Heißpresse, überführt und bei einer Temperatur von 140 °C bis 190 °C, vorteilhaft bei einer Temperatur von 160 °C bis 180 °C und bei einem Druck von 10 MPa bis 45 MPa zu einem Laminat mit Trägerplatte aus Holz- und Kunststofffasern und einem Echtholzfurnier auf der Oberseite der Trägerplatte verpresst und anschließend in der Presse unter Druck herabgekühlt. Dabei wird die Fasermatte von einer Stärke von z. B. 25 mm bis 30 mm auf eine Stärke von z. B. auf 4mm bis 5 mm komprimiert, so dass eine Trägerplatte mit einer Dichte von z. B. 800 kg/m³ entsteht. Während des Pressvorgangs schmilzt mindestens die Kunststofffaser von ihrer Oberfläche her und der erweichte oder verflüssigte Kunststoff bindet die Holzfasern und bindet die Kunststofffasern untereinander. Der erweichte bzw. verflüssigte Kunststoff dringt außerdem auch mindestens in die äußere Schicht des Furniers ein, das an die Fasermatte anliegt, wodurch das Echtholzfurnier an die Fasermatte bzw. an die während des Pressvorgangs entstehende Trägerplatte aus Holz- und Kunststofffasern gebunden wird. Die Herstellung des Laminats ist also dadurch wesentlich vereinfacht, dass keine separate Schicht mit Kunstharz aufgetragen werden muss, um das Echtholzfurnier an die Fasermatte bzw. Trägerplatte zu binden. Die Kunststofffasern sind nicht aus dem in der Regel nach dem Stand der Technik zum Fixieren des Echtholzfurniers bzw. als Bindemittel von Holzwerkstoffplatten eingesetzten Kunstharz. Trotzdem hat sich herausgestellt, dass das Echtholzfurnier zuverlässig mit der Fasermatte bzw. der Trägerplatte verbunden wird.

Bevorzugt wird auf der Unterseite der Fasermatte ein Gegenzug angeordnet, z. B. um einen gleichmäßigen und spannungsfreien Aufbau des Laminats zu gewährleisten oder um der Unterseite ein dekoratives Aussehen zu verleihen. Der Gegenzug kann aus Papier, typisch Kraftpapier oder aus einem anderen Material hergestellt sein, z. B. Kork oder Furnier. Der Gegenzug wird vor dem Pressvorgang unter der Fasermatte angeordnet und er wird ebenfalls durch den sich schmelzenden oder verflüssigten Kunststoff der Kunststofffasern mit der Fasermatte bzw. der daraus hergestellten Trägerplatte verbunden. Auch hier kann auf die nach dem Stand der Technik erforderliche Kunstharzschicht verzichtet werden.

Nach einer vorteilhaften Ausführung dringt der erweichte oder verflüssigte Kunststoff bis zur Hälfte in das Echtholzfurnier ein oder er durchdringt das Furnier vollständig. Der Fachmann kann in wenigen Versuchen die individuell gewünschte Eindringtiefe des Kunstharzes in das Echtholzfurnier bestimmen, in Abhängigkeit z. B. vom jeweils eingesetzten Kunststoff, des Anteils der Kunststofffasern am Gesamt-Fasergemisch, dem aufzubringenden Echtholzfurnier sowie der gewählten Pressbedingungen (typisch: Temperatur, Druck und Pressdauer). Es kann also, bezogen auf die Stärke des Echtholzfurniers, z.B. je nach Anforderung an die Echtholz-Oberfläche bevorzugt eine Eindringtiefe des Kunststoffes von bis zu 10%, bis zu 30%, bis zu 50%, bis zu 80 % oder bis zu 100% eingestellt werden. Durch das Eindringen bzw. Einbringen des Kunststoffs in das Echtholzfurnier steigt die Dichte des Furniers und damit die Beständigkeit gegen Feuchte und auch die Dimensionsstabilität des Furniers z. B. bei Schwankungen des Feuchtegehalts der Umgebungsluft. Vorteilhaft wird die von der Fasermatte abgewandte äußere Oberfläche des Echtholzfurniers nicht vom Kunststoff durchdrungen, wenn die äußere Oberfläche beschichtet werden soll, z.B. mit Öl zur Versiegelung oder mit Farbe zum Erzeugen eines farbigen Dekors.

Das Echtholzfurnier kann nach einer weiteren Ausführung während des Pressvorgangs komprimiert werden. Auch das Komprimieren des Echtholzfurniers steigert die Dichte des Furniers und macht die Oberfläche des erfindungsgemäßen Laminats beständiger z. B. gegen Druckbelastung. Das Furnier kann z.B. auf bis zu 70 % der ursprünglichen Furnierstärke komprimiert werden.

Die Stärke des Echtholzfurniers beträgt typisch mindestens 0,3 mm bis 1,3 mm. Eingesetzt werden sowohl Furniere aus preiswertem Holz ohne besondere Oberflächenstruktur, also ohne erkennbare Färbung bzw. Jahrring- oder Porenstruktur, z. B. Birken-Schälfurnier oder Furniere aus Holz mit hochwertiger, dekorativer Oberfläche, z. B. Eiche oder Nussbaum. Insbesondere dann, wenn die Furnieroberfläche kein ästhetisch ansprechendes Dekor zeigt, kann nach einer bevorzugten Ausführung der Erfindung Farbe auf das Echtholzfurnier aufgebracht werden, insbesondere um ein ästhetisch ansprechendes Holzdekor zu erzeugen. Typisch ist das Aufbringen von unterschiedlichen Farbtönen, um z. B. eine ansprechende Jahrring- und/oder eine Porenstruktur zu erzeugen. Auf das Furnier kann auch mit Hilfe eines Digitaldruckers ein Dekor aufgebracht werden. Damit können qualitativ nicht sehr hochwertige Furniere optisch aufgewertet werden. Dabei kann entweder ein vollständiger Überdruck erfolgen oder einzelne Dekorelemente ergänzt werden. Die Digitaldrucker können mit Wasser- oder UV-Tinten arbeiten, was von einer später aufgebrachten Versiegelungsschicht abhängt. Bei Verwendung eines harzimprägnierten Overlays als Versiegelungsschicht muss mit wässrigen Tinten gearbeitet werden. Bei Verwendung eines UV- oder ESH-Lackes als Versiegelungsschicht muss mit UV-Tinten gearbeitet werden. Gegebenenfalls muss vor und nach dem Druck ein Primer auf das Furnier aufgebracht werden.

Nach einer vorteilhaften Ausführung der Erfindung wird die Oberfläche des Echtholzfurniers versiegelt, so dass die Gebrauchseigenschaften und/oder die ästhetischen Eigenschaften des Echtholzfurniers weiter verbessert werden. Als Versiegelung können eine oder mehrere Beschichtungen auf die Oberfläche des Echtholzfurniers aufgebracht werden, z. B. Lack, insbesondere ein elektronenstrahlhärtender Lack (ESH-Lack) oder ein UV-härtender Lack, Öl, Wachs, Kunstharz, ein mit Kunstharz imprägniertes Overlay, das optional partikelförmigen Hartstoff enthält. Nach einer weiter bevorzugten ersten Alternative kann die Oberfläche mit Lack, Wachs oder Öl versehen werden, jeweils in einer oder in mehreren Beschichtungen. Dies führt zu einer sehr hochwertigen Anmutung der Echtholz-Oberfläche. Diese Alternative bietet sich daher besonders bei dekorativen Furnieren und auch bei Furnieren größerer Stärke an, damit das erfindungsgemäße Laminat dann den Eindruck von Fertigparkett erwecken kann.

Nach einer vorteilhaften zweiten Alternative, die insbesondere für ein wenig dekoratives Echtholzfurnier eingesetzt werden kann, dass ggf. durch das Aufbringen von Farbe bereits aufgewertet wurde, wird ein Kunstharz, optional ein mit Cellulose versetztes Kunstharz, z. B. Melaminharz auf das Echtholzfurnier aufgebracht oder es wird ein mit Kunstharz imprägniertes Papier, ein Overlay, auf die Oberfläche des Echtholzfurniers aufgelegt, wobei das Overlay aber auch das Kunstharz mit einem partikelförmigen Hartstoff versetzt sein kann, um z. B. die Abriebfestigkeit zu verbessern. Nach einer weiter bevorzugten Ausführung der Erfindung kann eine Struktur in die Oberfläche der des Echtholzfurniers bzw. bevorzugt der Versiegelung eingebracht werden. Die Struktur ist dreidimensional und wird häufig als Pore bezeichnet. Beispielsweise kann eine Struktur eingeprägt werden, die auf die echte oder durch Einfärbung entstandene Holzmaserung angepasst ist. Es sei ausdrücklich angemerkt, dass sämtliche hier im Zusammenhang mit der Erfindung beschriebenen Ausführungsformen frei miteinander kombiniert werden können, insbesondere kann jedes Echtholzfurnier sowohl mit oder ohne jede farbige Gestaltung mit jeder Versiegelung kombiniert werden.

Nach dem Verlassen der Heißpresse ist ein Laminat entstanden, das nach einer weiter bevorzugten Ausführung in Paneele aufgeteilt wird, meist durch Aufteilsägen. Dabei weisen die Paneele vorteilhaft mindestens zwei Kanten auf, die mit einem Profil versehen sind. Das Profil kann ein einfaches Nut-und-Federprofil sein. Besonders bevorzugt ist es ein Profil, das ein schwimmendes, leimloses Verlegen der Paneele ermöglicht, typisch ein Profil mit einer Auszugssperre, die ein Auseinanderziehen von zwei Paneelen in der Ebene der Paneele verhindert. Das Profil kann weiter vorteilhaft mit Fasen versehen sein, die an den Kanten zwischen Ober- bzw. Unterseite des Laminats und den Seitenflächen angebracht sind. Fasen vermitteln bei aneinandergrenzenden Paneelen den Eindruck von Fugen, was besonders bei hochwertigen Oberflächen den Eindruck von Fugen vermittelt, wie sie bei Echtholzpaneelen auftreten. Das Profil wird typisch durch Fräsen hergestellt.

Details der Erfindung werden nachfolgend am Beispiel verschiedener Ausführungsformen erläutert. Es zeigen in schematischer Darstellung:
- Fig. 1: eine erste Ausführung des erfindungsgemäßen Laminats mit einem Furnier von 1,3 mm Stärke
- Fig. 2: eine zweite Ausführung des erfindungsgemäßen Laminats mit einem Furnier von 0,5 mm Stärke

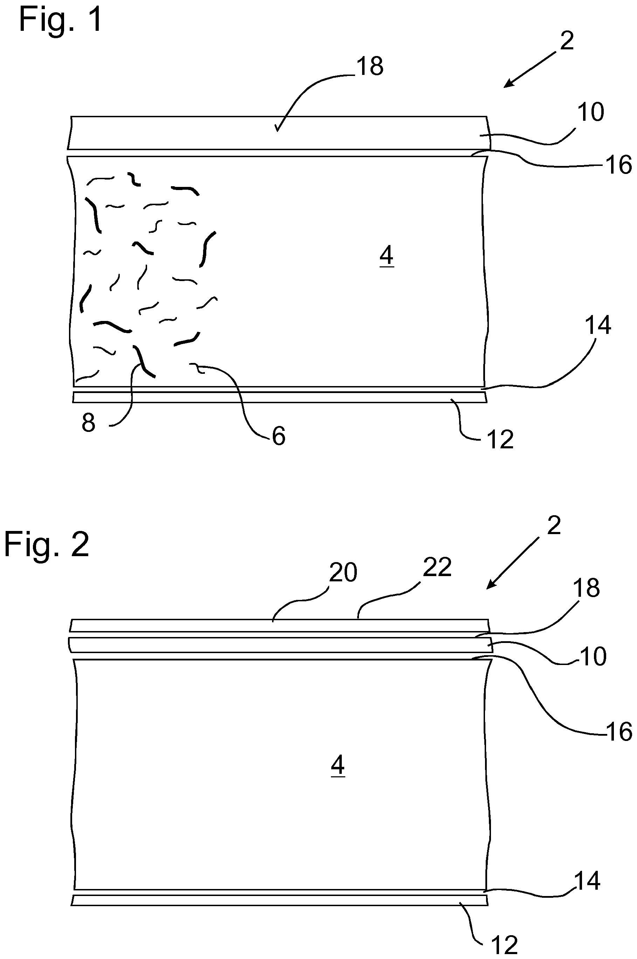

Fig. 1 zeigt ein Laminat 2, aufgebaut aus einer Trägerplatte 4, hergestellt aus einer Fasermatte, aufweisend 44 Gewichts-% Holzfasern 6 und 56 Gewichts-% Kunststofffasern 8, mit einem 1,3 mm starken Echtholzfurnier 10 auf der Oberseite und einem Gegenzug 12 auf der Unterseite. Die Kunststofffasern 8 weisen einen Kern aus Polypropylen und eine Hülle aus Polyethylen auf. Das Polyethylen, das den Polypropylenkern umhüllt, ist mit Maleinsäureanhydrid gegraftet. Das Echtholzfurnier 10 ist ein Messerfurnier; es zeigt ein ästhetisch ansprechendes Fladerbild aus z. B. Eiche oder Nussbaum. Der Gegenzug 12 ist hier aus Kraftpapier (Blattgewicht 120g/m²), kann aber auch aus Furnier, typisch einem Schälfurnier oder aus Kork gewählt werden.

Die Herstellung der Fasermatte erfolgt durch Kochen von Holzhackschnitzeln bis das Lignin so weit erweicht ist, dass die Fasern in einem Refiner voneinander getrennt werden können. Nach dem Trocknen der Fasern auf eine Restfeuchte von 10 % bis 12 % bezogen auf die Fasermasse werden die Fasern mit den vorstehend beschriebenen Kunststofffasern im oben angegebenen Mengenverhältnis gemischt und zu einem Vorvlies von ca. 300 mm Stärke gestreut. Nach dem Zerreißen des Vorvlieses wird daraus das Vlies von 300 mm Stärke als Endlosband gestreut. Die Breite des Vlieses ist auf die Maße der Presse abgestimmt und beträgt hier 2700 mm. Aus dem Vlies wird eine Fasermatte gebildet, indem das Vlies zwischen zwei umlaufenden Lochblech-Bändern aus Stahl verdichtet wird, wobei erhitzte Luft in das Vlies geblasen wird. Dadurch schmilzt die Hülle der Kunststofffasern, so dass Holz- und Kunststofffasern aneinander gebunden werden, während das Vlies auf eine Stärke von 30 mm zu einer Trägermatte komprimiert wird. Anders als ein Kunstharz, das unter Temperatureinwirkung aushärtet und dabei an Reaktivität verliert, bleibt der Kunststoff der Kunststofffasern in der Fasermatte schmelzfähig. Die Fasermatte wird von dem Endlosband in Abschnitte abgeteilt, die der Länge einer Heißpresse abgestimmt ist.

Nach dem Abkühlen der Fasermatte wird der Gegenzug 12 unter die Fasermatte gelegt, so dass sie an der Unterseite 14 der Fasermatte anliegt. Auf die Oberseite 16 der Fasermatte wird das Echtholzfurnier 10 gelegt. Dieser Pressgutstapel aus Gegenzug 12, Fasermatte und Echtholzfurnier 10 wird in eine Heißpresse überführt, in der unter Einwirkung von 160°C bei einem Druck von 35 MPA die Fasermatte zu einer Trägerplatte 4 von 4 mm Stärke komprimiert wird. Typische Heißpressen sind kontinuierlich arbeitende Pressen, die das Pressgut in aufeinanderfolgenden Sektionen sowohl unter Druck erhitzen als auch kühlen können. Die Hülle der Kunststofffasern schmilzt erneut auf und dringt von der Oberseite der Fasermatte in die äußere Fläche des Echtholzfurniers ein, die auf der Oberseite der Fasermatte aufliegt, in das Echtholzfurnier ein, wodurch das Echtholzfurnier 10 an die Trägerplatte 4 gebunden wird. Auch auf der Unterseite bindet der schmelzende Kunststoff der Fasermatte den Gegenzug 12. Es wird deutlich, dass hier auf ein Kunstharz als Bindemittel für das Echtholzfurnier 10 oder den Gegenzug 12 verzichtet werden kann.

Das so hergestellte Laminat 2 weist bei einer Stärke von 5 mm eine Oberfläche 18 aus Echtholzfurnier 10 auf. Das Echtholzfurnier 10 ist durch den eindringenden Kunststoff aus der Trägerplatte 4 und das Komprimieren des Furniers gegenüber dem Einwirken von Druckkräften stabilisiert. Um die hochwertige Anmutung einer Echtholzoberfläche zu wahren, wird nach einer weiter vorteilhaften Ausführung der Erfindung nach dem Herstellen des Laminats die Oberfläche 18 des Echtholzfurniers 10 mit Wachs oder Öl beschichtet, um die Gebrauchseigenschaften des Laminats zu verbessern, aber auch um ästhetische Eigenschaften wie z. B. die Haptik der Oberfläche 18 des Echtholzfurniers 10 zu optimieren. Alternativ kann Lack zum Schutz der Oberfläche aufgebracht werden. Der Lack kann optional partikelförmigen Hartstoff, z. B. Korund aufweisen, um die Abriebfestigkeit zu steigern. Wachs, Öl und /oder Lack können in einer Schicht aufgebracht werden; typisch ist es jedoch, dass mehrere Schichten Wachs, Öl oder Lack aufgebracht werden.

Fig. 2 zeigt eine zweite Ausführungsform des erfindungsgemäßen Laminats 2. Gleiche Elemente werden mit gleichen Bezugsziffern bezeichnet. Eingesetzt wird eine Fasermatte, die so hergestellt wie wird zur Fig. 1 beschrieben. Unter der Fasermatte wird ein Gegenzug 8 aus Kraftpapier angeordnet, auf der Fasermatte wird ein Echtholzfurnier 10 mit einer Stärke von 0,5 mm angeordnet. Das Echtholzfurnier 10 ist in diesem Fall ein Birken-Schälfurnier, das kein ästhetisch besonders ansprechendes Bild zeigt. Auf das Birken-Schälfurnier ist Farbe aufgebracht, um mit unterschiedlichen Farbtönen ein ästhetisch ansprechendes Holzdekor auf die Oberfläche 18 des Echtholzfurniers 10 aufzubringen. Die Farbe kann z. B. mittels Walzen oder mittels eines Digitaldruckers aufgetragen werden. Die Farbe kann vollflächig oder abschnittweise aufgetragen werden. Bei einem vollflächigen Farbauftrag wird häufig zuerst eine Grundierung aufgebracht, auf die dann abschnittweise eine von der Grundierung abweichende kontrastierende Farbe aufgetragen wird, um so z.B. ein Holzdekor nachzubilden. Das Birken-Schälfurnier ist nur 0,5 mm stark. Es ist, insbesondere mit der darauf aufgetragenen Farbe, nicht sehr widerstandsfähig gegen Abrieb oder Feuchtigkeit. Deshalb wird bei der Ausführungsform des Laminats nach Fig. 2 ein mit Melaminharz getränktes Overlaypapier 20 auf das Echtholzfurnier 10 aufgelegt, wenn eine wasserbasierte Farbe bzw. Tinte verwendet wurde. Wird eine Versiegelung aus UV-härtendem Lack aufgebracht, dann ist auch die Farbe bzw. Tinte UV- oder elektronenstrahlhärtend. Soll das Laminat z. B. als Fußbodenpaneel eingesetzt werden, dann ist das Overlaypapier 20 bzw. das Kunstharz mit Korund versetzt. Korund als partikulärer Hartstoff ist geeignet, die Abriebfestigkeit der Oberfläche 22 des Laminats zu verbessern. Der Pressgutstapel aus Gegenzug 12, Fasermatte, Echtholzfurnier 10 und Overlaypapier 20 wird in die Heißpresse überführt und unter den im Ausführungsbeispiel zu Fig. 1 angegebenen Bedingungen zu einem Laminat verpresst mit einer Trägerplatte 4 aus Holzfasern und Kunststofffasern, auf deren Unterseite 14 ein Gegenzug 12 angeordnet ist, während auf der Oberseite 16 ein Echtholzfurnier 10 liegt, auf dem ein Overlaypapier 20 angeordnet ist. Anders als bei der Ausführung nach Fig. 1 weist das Pressblech, das auf das Overlaypapier 20 einwirkt, Strukturen auf, die negativ in dem verflüssigten und nach dem Pressvorgang abgekühlten Kunstharz des Overlaypapiers 20 abgebildet werden, das die Oberfläche 22 des Laminats 2 bildet. Diese dreidimensionalen Strukturen sind auf das farbige Dekor auf der Oberfläche 18 des Echtholzfurniers abgestimmt, insbesondere auf die Porenstruktur des farbigen Dekors.

Während des Pressvorgangs verflüssigt sich zunächst der Kunststoff der Fasermatte, aber auch das Kunstharz des Overlaypapiers 20 und dringen in das Echtholzfurnier 10 ein, ohne das farbgebende, ästhetische ansprechende Dekor auf der Oberfläche des Echtholzfurniers 10 zu beschädigen. Das Kunstharz des Overlaypapiers 20 nimmt dabei wie vorstehend beschrieben die durch das Pressblech vorgegebene Porenstruktur an. Der Kunststoff der Fasermatte dringt zudem auch in den Gegenzug 12 ein. Nach dem Verpressen und Abkühlen liegt ein Laminat vor, das ein dünnes Echtholzfurnier 10 auf der Oberseite 16 einer Trägerplatte 4 zeigt, die Holzfasern 6 und Kunststofffasern 8 aufweist. Das Echtholzfurnier 10 wird durch das Overlaypapier 20 versiegelt, so dass das Laminat eine verschleißfeste Oberfläche 22 aufweist. Auf der Unterseite der Trägerplatte 4 befindet sich ein Gegenzug 12. Das Laminat 2 nach Fig. 2 ist ein preiswertes Echtholz-Laminat mit einer ästhetisch ansprechenden, gebrauchsfertigen und widerstandsfähigen Oberfläche 22, die durch eine äußere Lage aus Kunstharz versiegelt ist.

Das Laminat 2 nach Fig. 1 oder 2 wird vorteilhaft mittels Aufteilsägen in Paneele aufgeteilt. Mindestens zwei einander gegenüberliegende Kanten des Paneels werden anschließend mit einem Profil versehen, vorzugsweise einem Nut-Feder-Profil, bevorzugt mit einem Profil mit einer Auszugssperre, um ein leimloses Verlegen der Paneele zu ermöglichen. Die Paneele können als Wand-, Decken- oder Fußbodenpaneele eingesetzt werden. Die Oberfläche des Echtholzpaneels kann, insbesondere mit einer auf die Oberfläche des Echtholzfurniers aufgebrachten Versiegelung, so verschleißfest gestaltet werden, dass Fußbodenpaneele für hohe Beanspruchungen hergestellt werden können.

## Patentansprüche

1. Verfahren zum Herstellen eines Laminats mit den Schritten
- Herstellen einer vorverdichteten Fasermatte, aufweisend Holzfasern (6) und Kunststofffasern (8), als Trägerplatte (4)
- Auflegen eines Echtholzfurniers (10) auf eine Oberseite der Fasermatte, sowie
- Verpressen von Echtholzfurnier (10), Fasermatte und Gegenzug (12) zu einem Laminat.

2. Verfahren nach Anspruch 1, **dadurch gekennzeichnet, dass** der schmelzende Kunststoff der Kunststofffasern in das Echtholzfurnier (10) eindringt.

3. Verfahren nach mindestens einem der Ansprüche 1 oder 2, **dadurch gekennzeichnet, dass** ein Furnier (10) mit einer Stärke von 0,3 mm bis 1,3 mm zum Auflegen auf die vorverdichtete Fasermatte eingesetzt wird.

4. Verfahren nach mindestens einem der Ansprüche 1 bis 3, **dadurch gekennzeichnet, dass** auf eine Oberfläche (18) des Echtholzfurniers (10) Farbe aufgebracht wird.

5. Verfahren nach mindestens einem der Ansprüche 1 bis 4, **dadurch gekennzeichnet, dass** eine Versiegelung (20) auf die Oberfläche (18) des Echtholzfurniers (10) aufgebracht wird, wobei zum Versiegeln der Oberfläche (18) eine oder mehrere der nachfolgenden Beschichtungen auf das Echtholzfurnier (10) aufgebracht wird: Lack, Öl, Wachs, Kunstharz, ein mit Kunstharz imprägniertes Overlay, das optional partikelförmigen Hartstoff enthält.

6. Verfahren nach mindestens einem der Ansprüche 1 bis 5, **dadurch gekennzeichnet, dass** in die Oberfläche (18) des Echtholzfurniers (10) oder eine Versiegelung (20) eine Struktur eingebracht wird.

7. Laminat, aufweisend eine Trägerplatte, aufweisend Holzfasern und Kunststofffasern, wobei eine Oberseite (16) der Trägerplatte (4) mit einem Echtholzfurnier (10) versehen ist und wobei Kunststoff der Kunststofffasern (8) in das Echtholzfurnier (10) eingedrungen ist.

8. Laminat nach Anspruch 7, **dadurch gekennzeichnet, dass** das Echtholzfurnier (10) eine Stärke von 0,3 mm bis 1,3 mm aufweist.

9. Laminat nach mindestens einem der Ansprüche 7 oder 8, aufweisend einen Gegenzug (12) auf der Unterseite der Trägerplatte.

10. Laminat nach mindestens einem der Ansprüche 7 bis 9, aufweisend ein Echtholzfurnier (10) mit einer gefärbten Oberfläche (18), insbesondere ein Echtholzfurnier (10), auf das ein abweichendes Holzdekor mit Farbe aufgebracht ist.

11. Laminat nach mindestens einem der Ansprüche 7 bis 10, **dadurch gekennzeichnet, dass** die Oberfläche (18) des Echtholzfurniers (10) mit einer Versiegelung (20) versehen ist, die aufgebaut ist aus einer oder mehreren der nachfolgenden Beschichtungen auf der Oberfläche: Lack, Öl, Wachs, Kunstharz, ein mit Kunstharz imprägniertes Overlay, das optional partikelförmigen Hartstoff enthält.

12. Laminat nach mindestens einem der Ansprüche 7 bis 11, **dadurch gekennzeichnet, dass** in die Oberfläche (18) des Echtholzfurniers (10) oder in die Versiegelung (20) eine Struktur eingebracht ist.

13. Laminat nach mindestens einem der Ansprüche 7 bis 12, **dadurch gekennzeichnet, dass** mindestens zwei Kanten eines Paneels aus Laminat (2) mit einem Profil versehen sind.

## Claims

1. A method to produce a laminate with the steps:
- producing a pre-compressed fiber mat having wood fibers (6) and plastic fibers (8) as a support plate (4)
- placing a genuine wood veneer (10) on an upper face of the fiber mat, and
- pressing the genuine wood veneer (10), fiber mat and backing (12) into a laminate.

2. The method according to claim 1, **characterized in that** the melting plastic of the plastic fibers penetrates into the genuine wood veneer (10).

3. The method according to at least one of claims 1 to 2, **characterized in that** a veneer (10) with a thickness of 0.3 mm to 1.3 mm is used to be placed on the pre-compressed fiber mat.

4. The method according to at least one of claims 1 to 3, **characterized in that** paint is applied on a surface (18) of the genuine wood veneer (10).

5. The method according to at least one of claims 1 to 4, **characterized in that** a seal (20) is applied on the surface (18) of the genuine wood veneer (10), wherein for sealing the surface (18), one or more of the subsequent coatings is applied to the genuine wood veneer (10): varnish, oil, wax, artificial resin, an overlay impregnated with artificial resin that optionally contains hard particles.

6. The method according to at least one of claims 1 to 5, **characterized in that** a structure is introduced into the surface (18) of the genuine wood veneer (10) or a seal (20).

7. A laminate having a support plate, having wood fibers and plastic fibers, wherein an upper face (16) of the support plate (4) is provided with a genuine wood veneer (10), and wherein plastic from the plastic fibers (8) has penetrated into the genuine wood veneer (10).

8. The laminate according to claim 7, **characterized in that** the genuine wood veneer (10) has a thickness of 0.3 mm to 1.3 mm.

9. The laminate according to at least one of claims 7 or 8, having a backing (12) on the lower face of the support plate.

10. The laminate according to at least one of claims 7 to 9, having a genuine wood veneer (10) with a colored surface (18), in particular a genuine wood veneer (10) onto which a differing wood decor is applied with paint.

11. The laminate according to at least one of claims 7 to 10, **characterized in that** the surface (18) of the genuine wood veneer (10) is provided with a seal (20) that is formed from one or more of the following coatings on the surface: varnish, oil, wax, artificial resin, an overlay impregnated with artificial resin that optionally contains hard particles.

12. The laminate according to at least one of claims 7 to 11, **characterized in that** a structure is introduced into the surface (18) of the genuine wood veneer (10) or into the seal (20).

13. The laminate according to at least one of claims 7 to 12, **characterized in that** at least two edges of a panel consisting of laminate (2) are provided with a profile.

## Revendications

1. Procédé de fabrication d'un laminé avec les étapes suivantes :
- fabrication d'un tapis de fibres précompacté, présentant des fibres de bois (6) et des fibres synthétiques (8), en tant que plaque de support (4),
- pose d'un placage en bois véritable (10) sur une face supérieure du tapis de fibres, et
- pressage du placage en bois véritable (10), du tapis de fibres et du contrebalancement (12) en un laminé.

2. Procédé selon la revendication 1, **caractérisé en ce que** la matière synthétique fondante des fibres synthétiques pénètre dans le placage en bois véritable (10).

3. Procédé selon l'une au moins des revendications 1 ou 2, **caractérisé en ce qu'**un placage (10) avec une épaisseur de 0,3 mm à 1,3 mm est utilisé pour la pose sur le tapis de fibres précompacté.

4. Procédé selon l'une au moins des revendications 1 à 3, **caractérisé en ce que** de la peinture est appliquée sur une surface (18) du placage en bois véritable (10).

5. Procédé selon l'une au moins des revendications 1 à 4, **caractérisé en ce qu'**un scellage (20) est appliqué sur la surface (18) du placage en bois véritable (10), un ou plusieurs des revêtements suivants étant appliqués sur le placage en bois véritable (10) pour le scellage de la surface (18): vernis, huile, cire, résine synthétique, un recouvrement imprégné avec résine synthétique contenant facultativement une matière dure sous forme de particules.

6. Procédé selon l'une au moins des revendications 1 à 5, **caractérisé en ce qu'**une structure est intégrée dans la surface (18) du placage en bois véritable (10) ou dans un scellage (20).

7. Laminé, présentant une plaque de support présentant des fibres de bois et des fibres synthétiques, dans lequel une face supérieure (16) de la plaque de support (4) est pourvue d'un placage en bois véritable (10) et dans lequel de la matière synthétique des fibres synthétiques (8) a pénétré dans le placage en bois véritable (10).

8. Laminé selon la revendication 7, **caractérisé en ce que** le placage en bois véritable (10) présente une épaisseur de 0,3 mm à 1,3 mm.

9. Laminé selon l'une au moins des revendications 7 ou 8, présentant un contrebalancement (12) sur la face inférieure de la plaque de support.

10. Laminé selon l'une au moins des revendications 7 à 9, présentant un placage en bois véritable (10) avec une surface (18) peinte, en particulier un placage en bois véritable (10), sur lequel est appliquée une décoration en bois distincte avec de la peinture.

11. Laminé selon l'une au moins des revendications 7 à 10, **caractérisé en ce que** la surface (18) du placage en bois véritable (10) est pourvue d'un scellage (20), lequel est constitué de l'un ou de plusieurs des revêtements suivants sur la surface: vernis, huile, cire, résine synthétique, un recouvrement imprégné avec résine synthétique contenant facultativement une matière dure sous forme de particules.

12. Laminé selon l'une au moins des revendications 7 à 11, **caractérisé en ce qu'**une structure est intégrée dans la surface (18) du placage en bois véritable (10) ou dans le scellage (20).

13. Laminé selon l'une au moins des revendications 7 à 12, **caractérisé en ce qu'**au moins deux arêtes d'un panneau en laminé (2) sont pourvues d'un profilé.
